# EUROPEAN PATENT SPECIFICATION

(11) **EP 3 101 872 B1**
(45) Date of publication and mention of the grant of the patent: **27.12.2017**
(21) Application number: 15290144.3
(22) Date of filing: 01.06.2015
(51) Int. Cl.: H04L 29/08, H04L 12/24

(54) **LOAD BALANCING SERVER FOR FORWARDING PRIORITIZED TRAFFIC FROM AND TO ONE OR MORE PRIORITIZED AUTO-CONFIGURATION SERVERS**
LASTAUSGLEICHSSERVER ZUM WEITERLEITEN VON PRIORISIERTEM VERKEHR VON UND ZU EINEM ODER MEHREREN PRIORISIERTEN AUTOKONFIGURATIONSSERVERN
SERVEUR D'ÉQUILIBRAGE DE CHARGE POUR LE RÉACHEMINEMENT DE TRAFIC PRIORISÉ DEPUIS ET VERS UN OU PLUSIEURS SERVEURS D'AUTO-CONFIGURATION PRIORISÉS

(43) Date of publication of application: 07.12.2016
(73) Proprietor: ALCATEL LUCENT, 92100 Boulogne-Billancourt (FR)
(72) Inventor: Danisik, Bahadir, 06520 Ankara (TR); Yang, Jigang, Murray Hill, NJ 07974-0636 (US)
(74) Representative: ALU Antw Patent Attorneys

(56) References cited:
- EP-A1- 2 159 961
- WO-A2-2011/117193
- CN-A- 103 001 783
- US-A1- 2010 030 875

## Description

### Technical Field

The present disclosure generally relates to the field of automatic configuration and management of network communication devices or Customer-Premises Equipment (CPE) by Auto-Configuration Servers (ACS servers). More particular, the disclosure relates to a load balancing server for forwarding traffic from and to multiple auto-configuration servers.

### Background

Telecommunication operators and network communication service suppliers build up relative hardware equipment for providing customers or end-users with their services. One aspect is providing remote management of end-users' network communication devices.

Auto-Configuration Servers (ACS) are used for remotely managing Customer Premises Equipment (CPE) devices connected to a common network. An ACS server typically is deployed in a cluster of multiple ACS servers, wherein one specific ACS server can manage multiple CPE devices. The ACS server communicates during an auto-configuration session with each CPE device according to an ACS protocol, e.g. the TR-069 protocol.

For broadband network communication systems, the Broadband Forum defines the TR-069 protocol for a management server to remotely manage a CPE device. In the TR-069 protocol, a CPE may establish a TR-069 (CWMP) session with an ACS server. Hereby, the ACS server is enabled to configure and manage the CPE device during the auto-configuration session.

CPE devices typically send inform messages to communicate with the ACS servers. These inform messages can be triggered because of events like 'boot' or 'bootstrap' for a CPE device, or a value change of a parameter. Also it can be a periodic inform message which is scheduled periodically by an ACS server. During a regular time, ACS servers are responding to all different types of inform messages and, when needed, execute management actions on the CPE devices. A management action can be an operation triggered by the ACS server in case of bulk device management. Next to this, it can be an event-based mechanism triggered by the CPE device itself, or it can be initiated by an Operations Support System (OSS) using the North Bound Interface (NBI) or system of an ACS server.

United States Patent Application US 2010/0030875 entitled "Method and System for Remote Device Management" describes a system for remote device management that includes an auto-configuration server managing device, a database, and a plurality of auto-configuration servers. The auto-configuration server managing device is arranged for communication with manageable electronic devices over the network, and further is coupled with the database. The auto-configuration server managing device receives a request from a manageable electronic device, determines an identification of the manageable electronic device through consultation of the database, and determines an identification of the auto-configuration server that will provide configuration data to the manageable electronic device in response to the request. The identification of the auto-configuration server is determined statically in view of the identification of the manageable electronic device.

Chinese Patent Application CN 103001783 entitled "Network Management System and Message Processing Method Thereof" describes a network management system with preset load balancing strategy for ACS servers. Messages that need to be processed are divided into a plurality of groups according to class of service. The ACS servers are divided into corresponding groups and the correspondence between message groups and ACS groups is stored in a load balancing server that forwards received messages to respective corresponding ACS servers in line with the preset load balancing strategy.

### Summary

Existing solutions do not provide any means to cope with overloaded ACS servers because of heavy management, power outage, buggy firmware and/or burst traffic in the network in an efficient way. One simple solution could be to increase capacity and/or the amount of ACS servers in the cluster. However, by increasing the number of servers therewith an expensive extra equipment cost has to be taken into account. Hence, there is a need for a more optimal and efficient approach for ACS systems in view of overloaded traffic. The scope of the invention is defined by the appended claims.

It is an object to provide a load balancing server for forwarding traffic from and to multiple ACS (Auto-Configuration Server) servers. The load balancing server is coupled via a network to at least one CPE (Customer-Premises Equipment) device, coupled to one or more prioritized ACS servers and coupled to one or more non-prioritized ACS servers. The load balancing server comprises a storing module, a receiving module and a forwarding module.

The storing module configured to receive a CPE prioritize request comprising a CPE device identification and a corresponding time-to-live. The module is further configured to store the CPE device identification and the corresponding time-to-live into a memory database. Also the module is configured to eliminate the CPE device identification and the corresponding time-to-live from the memory database when the time-to-live for the CPE device identification is expired.

The receiving module is configured to receive an inform message and to extract a CPE device identification from the inform message. Further, the receiving module is configured to determine if the CPE device identification is stored in the memory database.

The forwarding module is configured to forward the inform message to a prioritized ACS server, if the CPE device identification is stored in the memory database. Otherwise the module is configured to forward the inform message to a non-prioritized ACS server, if the CPE device identification is not stored in the memory database.

Based on the initiator or identification of a CPE device, the load balancing server allows for an optimization in ACS traffic handling. The ACS servers are divided in at least two clusters of respective prioritized and non-prioritized ACS servers. When the ACS servers are busy or overloaded because of heavy management actions or burst traffic, CPE devices which need more priority, can be prioritized by storing a corresponding CPE device identification into a memory database, for a short period of time, i.e. the time-to-live.

This way, traffic can be segregated based on a priority or need for CPE devices. This allows an optimization for e.g. high-demand auto-configuration operations in comparison to other less demanding ACS operations for CPE devices. As a CPE device will be prioritized for a specific short period of time, busy or overloaded (prioritized) ACS servers are prevented. Hence, the use of the load balancing server leads to a more optimal and efficient ACS management in view of overloaded traffic and high demanding ACS operations, e.g. ACS operations sensitive to a high latency between CPE and ACS server.

The term "load balancing server" in underlying disclosure should be understood as a computing device or computer which is provided with a network interface for communicating via one or more other network edge devices to a network. Possible implementations of the load balancing server could comprise a computer, a server, a router, a switch, a modem, a portable device, a tablet computer, etc. Alternatively, the term load balancing server should also be understood as a computing system or a cloud system, possibly comprising features in a distributed way.

The term "CPE device" or "Customer Premises Equipment device" in underlying disclosure should be understood as a hardware device or equipment typically located at the home or business of a customer.

The term "auto-configuration server" or "ACS server" in underlying disclosure should be understood as a computing device or computer which is provided with a network interface for communicating via one or more other network edge devices to a network. Possible implementations of the ACS server could comprise a computer, a server, a router, a switch, a modem, a portable device, a tablet computer, etc. Alternatively, the term ACS server should also be understood as a computing system or a cloud system, possibly comprising features in a distributed way. The auto-configuration server or ACS server is configured to remotely configure and/or manage one or more CPE devices.

The term "time-to-live" or "TTL" in underlying disclosure should be understood as a period of time that the CPE device identification will be available in the memory database. After this period of time, the corresponding CPE device is no longer prioritized, except in the case an additional CPE prioritize request is made for the corresponding CPE device.

According to an embodiment, the forwarding module is configured to open an ACS session with the prioritized ACS server and via the ACS session forward the inform message to the prioritized ACS server, if the CPE device identification is stored in the memory database. Otherwise, the forwarding module is configured to open an ACS session with the non-prioritized ACS server and via the ACS session forward the inform message to the non-prioritized ACS server, if the CPE device identification is not stored in the memory database.

According to an embodiment, an ACS session concerns a TR-069 session.

According to an embodiment, the receiving module is further configured to receive one or more subsequent messages from a CPE device corresponding to the CPE device identification and wherein the forwarding module is further configured to forward the one or more subsequent messages to the prioritized ACS server, if the CPE device identification is stored in the memory database. Otherwise, the forwarding module is configured to forward the one or more subsequent messages to the non-prioritized ACS server, if the CPE device identification is not stored in the memory database.

It is advantageous to forward further traffic (e.g. for an ACS session) between the CPE device and the same non-prioritized ACS server or prioritized ACS server.

According to an embodiment, the CPE device identification corresponds to a CPE device which is determined to perform delay-sensitive ACS operations.

It is advantageous to prioritize CPE devices which are to be configured or managed by an ACS server by an operation which is delay-sensitive. In case of high load for the ACS servers, as traffic is segregated and delay-sensitive operations will be handled by the one or more prioritized ACS servers, this allows to reduce the latency between the corresponding CPE device and ACS server. Typically, for example in troubleshooting operations, e.g. Customer Service Console (CSC) operations, wherein a help desk person does troubleshooting of the customer's CPE device, the roundtrip time for such operations is very critical in order to solve an issue quickly.

According to an embodiment, the CPE device identification corresponds to a CPE device which is determined to perform NBI initiated ACS operations.

ACS actions or operations originating from NBI are typically prone to high latency. Therefore, prioritizing NBI initiated ACS operations allows to reduce latency and guarantee a certain end-to-end response for these operations, such as for CSC troubleshooting operations. Any high load for the non-prioritized ACS servers will not have any impact.

According to an embodiment, the CPE prioritize request is received from an ACS server or an OSS of an ACS server.

According to an embodiment, the storing module is configured to store the CPE device identification and the corresponding time-to-live into a memory database by adding a data record to a data record list in the memory database, wherein the data record comprises the CPE device identification and the corresponding time-to-live.

According to an embodiment, the time-to-live of the CPE prioritize request concerns a predetermined time-to-live.

A predetermined time-to-live can preferably be determined based on an average or specific setup of an ACS system and corresponding network properties.

According to an embodiment, the time-to-live of the CPE prioritize request concerns an ACS operation-specific time-to-live.

This is advantageous as some ACS operations will need a short processing, others for example need multiple ACS sessions, e.g. wherein several reboots or upgrades of a CPE device are executed. Taking this into account, a more optimized and efficient ACS traffic handling will be achieved.

According to an embodiment, the CPE device identification comprises one or more of the following list:
- a device serial number;
- an organizationally unique identifier (OUI);
- a product class.

According to an embodiment, inform messages and/or subsequent messages forwarded by the load balancing server according to a HTTP-based protocol.

The term "HTTP-based protocol" in underlying disclosure should be understood as a network protocol based on a HyperText Transfer Protocol, such as HTTP1.x, HTTP2.x, etc.

According to an embodiment, the HTTP-based protocol concerns a TR-069 protocol.

The term "TR-069 protocol" in underlying disclosure should be understood as a protocol for a management server to remotely manage a CPE device, such as defined by the Broadband Forum as e.g. "Technical Report 069". Herein commands are defined as 'GetParameterValues', 'SetParameterValues', 'Download', etc.

According to an embodiment, the CPE prioritize request is received through an Application Programming Interface (API) call.

According to an embodiment, the API call concerns a Representational State Transfer (REST) call or a Simple Object Access Protocol (SOAP) call.

The term "REST" or "Representational State Transfer" in underlying disclosure should be understood as an architectural style or set of constraints as developed by W3C Technical Architecture Group. A rest call can be issued by a REST API by an ACS server or OSS of an ACS server.

According to an embodiment, the one or more prioritized ACS servers comprise one or more NBI ACS servers.

The term "NBI ACS server" or "North Bound Interface ACS server" in underlying disclosure should be understood as an ACS server adapted to perform NBI initiated ACS operations and communication with an OSS client.

In a second aspect, the disclosure concerns a method for forwarding traffic from and to multiple ACS servers. The method comprises following steps:
- receiving a CPE prioritize request comprising a CPE device identification and a corresponding time-to-live;
- storing the CPE device identification and the corresponding time-to-live into a memory database;
- eliminating the CPE device identification from the memory database and the corresponding time-to-live when the time-to-live is expired;
- receiving an inform message;
- extracting a CPE device identification from the inform message;
- determining if the CPE device identification is stored in the memory database;
   and
- forwarding the inform message to:
   ∘ a prioritized ACS server, if the CPE device identification is stored in the memory database;
   ∘ a non-prioritized ACS server, if the CPE device identification is not stored in the memory database.

According to an embodiment, forwarding the inform message concerns:
- opening an ACS session with and via the ACS session forwarding the inform message to:
   ∘ the prioritized ACS server, if the CPE device identification is stored in the memory database;
   ∘ the non-prioritized ACS server, if the CPE device identification is not stored in the memory database.

According to an embodiment, the method further comprises:
- receiving one or more subsequent messages from a CPE device corresponding to the CPE device identification;
- forwarding the one or more subsequent messages to:
   ∘ the prioritized ACS server, if the CPE device identification is stored in the memory database;
   ∘ the non-prioritized ACS server, if the CPE device identification is not stored in the memory database.

### Brief Description of the Drawings

Fig. 1 shows a block diagram of a load balancing server coupled to a CPE device via a network, to ACS servers and to a memory database, according to an embodiment of underlying disclosure.

Fig. 2 shows a flow chart of a method performed by the load balancing server of Fig. 1.

Fig. 3 shows a block diagram illustrating a computer network system wherein a load balancing server is interconnected, according to an embodiment of underlying disclosure.

### Detailed Description of Embodiment(s)

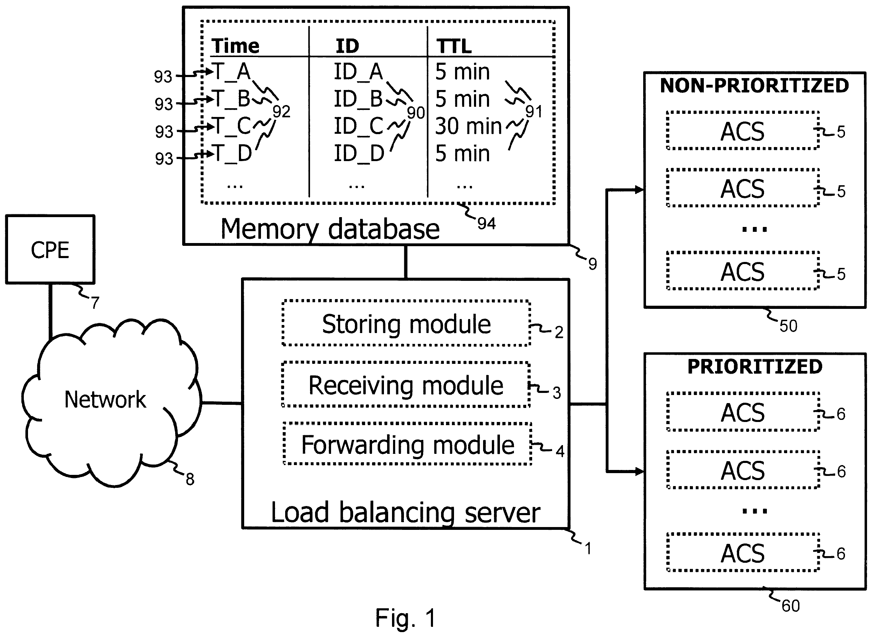

Fig. 1 shows a block diagram of a load balancing server (1), according to an embodiment of underlying disclosure.

The load balancing server (1) is coupled via a network (8) to a CPE device (7). Further, the load balancing server (1) is coupled to a cluster (50) of multiple non-prioritized ACS servers (5) and coupled to a cluster (60) of multiple prioritized ACS servers (6). The load balancing server (1) is coupled to a memory database (9). It should be clear that the memory database (9) could be provided as a separate device, but could also be provided in in-memory of the load balancing server (1).

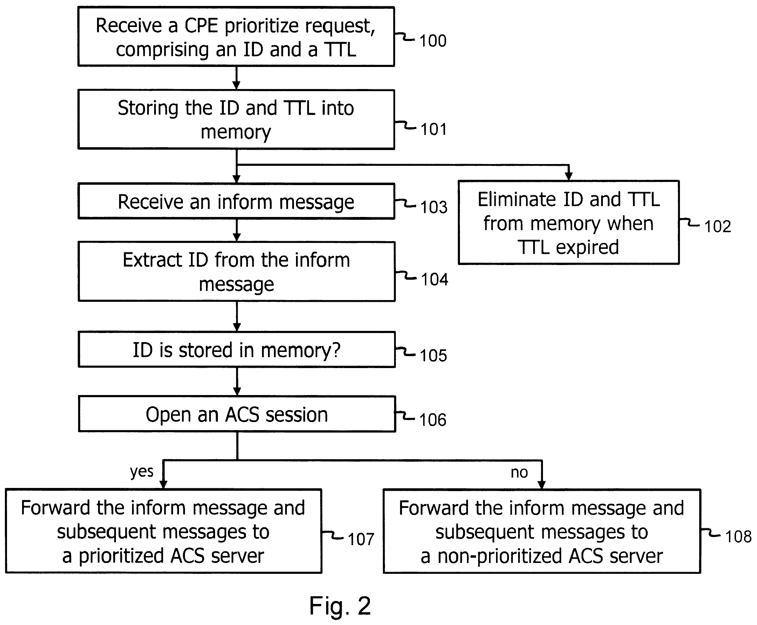

The load balancing server (1) comprises a storing module (2), a receiving module (3) and a forwarding module (4), which are configured to perform the method as shown by the flow chart of Fig. 2.

The storing module (2) is configured in a first step (100) to receive a CPE prioritize request, e.g. from a prioritized ACS server (6) or from an OSS client (61). The request comprises a CPE device identification (90) (ID) and a corresponding time-to-live (91) (TTL). Subsequently, the storing module (2) will store the CPE device identification (90) and the corresponding time-to-live (91) into the memory database (9).

For example, the memory database (9) contains a data record list (94), wherein data records (93) are stored. The storing module (2) can therefore store the CPE device identification (90) and the corresponding time-to-live (91) by adding a data record (93) containing the CPE device identification (90), the corresponding time-to-live (91) and the storing time (92), i.e. a time indication when the data record (93) was written into the memory database (9).

The CPE device identifications (90) 'ID_A', 'ID_B', 'ID_C' and 'ID_D' can for instance corresponds to a device serial number, an OUI, a product class or a combination thereof. The time-to-live (91) is e.g. predetermined to '5 minutes', and in case of e.g. more intensive ACS operations set to '30 minutes' (cfr. 'ID_C'). This allows the corresponding CPE device (7) to perform prioritized ACS operations during a longer time.

When the time-to-live expires, the storing module (2) will eliminate or remove (see step 102) the CPE device identification (90) and corresponding time-to-live (91) from the memory database (9). In case of a data record list (94), the storing module (2) will remove the corresponding data record (93) from the list (94) when the current time exceeds the stored time indication (92) added with the corresponding time-to-live (91).

The receiving module (3) is configured to receive an inform message (see step 103), then extract a CPE device identification (90) from this inform message in step 104, and further to determine if the extracted CPE device identification (90) is stored in the memory database (9) (in step 105).

The forwarding module (4) will open an ACS session (see step 106) with a prioritized ACS server (6) and via the ACS session will forward the received inform message to the prioritized ACS server (6), if the CPE device identification (90) was determined as stored in the memory database (9) (see step 107). If subsequent messages are received by the receiving module (3), the forward module (4) will forward them via the same ACS session to the same prioritized ACS server (6).

Otherwise, when the CPE device identification (90) is not found in the memory database (9), the forwarding module (4) will open an ACS session (see step 106) with a non-prioritized ACS server (6) and via the ACS session will forward the inform message to the non-prioritized ACS server (5) (see step 108). If subsequent messages are received by the receiving module (3), the forward module (4) will forward them via the same ACS session to the same non-prioritized ACS server (6).

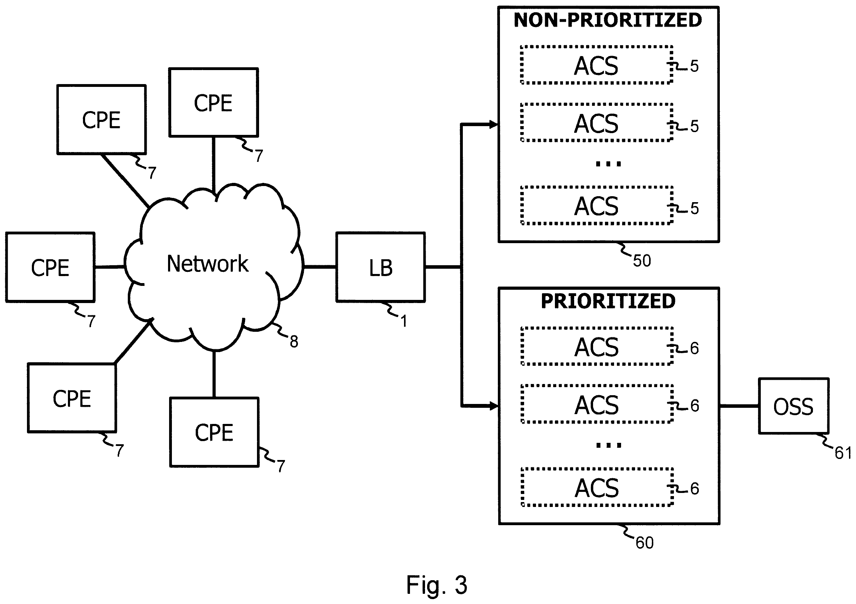

Fig. 3 shows a block diagram illustrating a computer network system with a load balancing server (1), according to an embodiment of underlying disclosure.

The load balancing server (1) in Figure 3 corresponds to a further embodiment of the load balancing server (1) of Figure 1. The cluster (50) of non-prioritized ACS servers (5) and the cluster (60) of prioritized ACS servers (6) is interconnected via the load balancing server (1) via the network (8) to multiple CPE devices (7). Communication between these devices is performed according to the TR-069 protocol. The cluster (60) of prioritized ACS servers (6) is provided with an Operations Support System or OSS (61) using the North Bound Interface (NBI) of the prioritized ACS servers (6).

Depending on the number of coupled CPE devices (7) to the network, one could set the number of ACS servers (5,6) for the clusters (50,60). In an exemplary embodiment wherein around 100k CPE devices (7) are connected, a network communication service supplier could set up e.g. one non-prioritized ACS server (5) and one prioritized ACS server (6) for performing the necessary ACS operations. In an alternative exemplary embodiment wherein around 10 million CPE devices (7) are applied, a network communication service supplier could then set up e.g. 20 to 25 non-prioritized ACS servers (5) and 5 to 10 prioritized ACS servers (6) for performing the many ACS operations.

For example, a CPE device (7) with a serial number "ID_X" needs to be managed by the OSS (61). The OSS (61) sends a CPE prioritize request by making a Representational State Transfer (REST) call to the load balancing server (1) and thereby the serial number (90) of the CPE device (7) will be added into the memory database (9) of the load balancing server (1). By default, the entry is added with a time-to-live of 5 minutes. Depending on the ACS operation type, this time-to-live can be set longer, e.g. 10 minutes, to cope with multiple ACS sessions taking several reboots and/or upgrades of the CPE device (7). Alternatively or additionally, a prioritized ACS server (6) can also make a REST call to the load balancing server (1) and thereby add the device identification (90) to the memory database (9) of the load balancing server (1).

The OSS (61) subsequently makes the NBI initiated call to manage the CPE device (7). The corresponding prioritized ACS server (6) puts the operation in its queue and sends a connection request message to the CPE device (7) with identification (90) 'ID_X'. Then, the CPE device (7) contacts with a TR-069 inform message the load balancing server (1). The receiving module (3) of the load balancing server (1) will read the device serial number (90) 'ID_X' in the inform message and will check if this device serial number (90) exists in the in memory database (9).

If it exists, the forwarding module (4) of the load balancing server (1) will forward the request to one of the prioritized ACS servers (6). As a result, a prioritized ACS server (6) will execute the management action to the CPE device (7) and return the response to the OSS (61). Typically, these NBI initiated ACS operations are delay-sensitive operations. For example, troubleshooting operations, e.g. Customer Service Console (CSC) operations, are sensitive to a high end-to-end response between OSS (61) and CPE device (7). If the device serial number (90) would not exist in the memory database (9), the forwarding module (4) of the load balancing server (1) would forward the request to one of the non-prioritized ACS servers (6).

The present embodiments are to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. It is to be understood that the terms so used are interchangeable under appropriate circumstances and embodiments of the invention are capable of operating according to the present invention in other sequences, or in orientations different from the one(s) described or illustrated above.

## Claims

1. A load balancing server (1) for forwarding traffic from and to multiple Auto-Configuration Servers, ACS servers (5,6), which load balancing server (1) is coupled via a network (8) to at least one Customer Premises Equipment device, CPE, device (7), coupled to one or more prioritized ACS servers (5) and coupled to one or more non-prioritized ACS servers (6), said load balancing server (1) comprising:
- a storing module (2) configured to:
∘ receive a CPE prioritize request comprising a CPE device identification (90) and a corresponding time-to-live (91);
∘ store said CPE device identification (90) and said corresponding time-to-live (91) into a memory database (9);
∘ eliminate said CPE device identification (90) from said memory database (9) and said corresponding time-to-live (91) when said time-to-live (91) is expired,
- a receiving module (3) configured to:
∘ receive an inform message;
∘ extract a CPE device identification (90) from said inform message;
∘ determine if said CPE device identification (90) is stored in said memory database (9), and
- a forwarding module (4) configured to forward said inform message to:
∘ a prioritized ACS server (6), if said CPE device identification (90) is stored in said memory database (9);
∘ a non-prioritized ACS server (5), if said CPE device identification (90) is not stored in said memory database (9).

2. A load balancing server (1) according to claim 1, wherein said forwarding module (4) is configured to open an ACS session with said prioritized ACS server (6) and via said ACS session forward said inform message to said prioritized ACS server (6), if said CPE device identification (90) is stored in said memory database (9), and wherein said forwarding module (4) is configured to open an ACS session with said non-prioritized ACS server (5) and via said ACS session forward said inform message to said non-prioritized ACS server (5), if said CPE device identification (90) is not stored in said memory database (9).

3. A load balancing server (1) according to claim 1, wherein said receiving module (3) is further configured to:
- receive one or more subsequent messages from a CPE device (7) corresponding to said CPE device identification (90); and
wherein said forwarding module (4) is further configured to:
- forward said one or more subsequent messages to:
∘ said prioritized ACS server (6), if said CPE device identification (90) is stored in said memory database (9);
∘ said non-prioritized ACS server (5), if said CPE device identification (90) is not stored in said memory database (9).

4. A load balancing server (1) according to claim 1, wherein said CPE device identification (90) corresponds to a CPE device (7) which is determined to perform delay-sensitive ACS operations.

5. A load balancing server (1) according to claim 1, wherein said CPE device identification (90) corresponds to a CPE device (7) which is determined to perform North Bound Interface, NBI, initiated ACS operations.

6. A load balancing server (1) according to claim 1, wherein said CPE prioritize request is received from an ACS server (6) or an Operations Support System, OSS, (61) of an ACS server (6).

7. A load balancing server (1) according to claim 1, wherein said storing module (2) is configured to store said CPE device identification (90) and said corresponding time-to-live (91) into a memory database (9) by adding a data record (93) to a data record list (94) in said memory database (9), wherein said data record (93) comprises said CPE device identification (90) and said corresponding time-to-live (91).

8. A load balancing server (1) according to claim 1, wherein said time-to-live (91) of said CPE prioritize request concerns a predetermined time-to-live.

9. A load balancing server (1) according to claim 1, wherein said time-to-live (91) of said CPE prioritize request concerns an ACS operation-specific time-to-live.

10. A load balancing server (1) according to claim 1, wherein said CPE device identification (90) comprises one or more of the following list:
- a device serial number;
- an organizationally unique identifier, OUI;
- a product class.

11. A load balancing server (1) according to claim 1, wherein inform messages and/or subsequent messages are forwarded by said load balancing server (1) according to a HTTP-based protocol.

12. A load balancing server (1) according to claim 1, wherein said HTTP-based protocol concerns a TR-069 protocol.

13. A load balancing server (1) according to claim 1, wherein said CPE prioritize request is received through an Application Programming Interface, API, call.

14. Method for forwarding traffic from and to multiple Auto-Configuration Servers, ACS servers (5,6), said method comprising following steps:
- receiving a Customer Premises Equipment, CPE, prioritize request comprising a CPE device identification (90) and a corresponding time-to-live (91);
- storing said CPE device identification (90) and said corresponding time-to-live (91) into a memory database (9);
- eliminating said CPE device identification (90) from said memory database (9) and said corresponding time-to-live (91) when said time-to-live (91) is expired;
- receiving an inform message;
- extracting a CPE device identification (90) from said inform message;
- determining if said CPE device identification (90) is stored in said memory database (9); and
- forwarding said inform message to:
∘ a prioritized ACS server (6), if said CPE device identification (90) is stored in said memory database (9);
∘ a non-prioritized ACS server (5), if said CPE device identification (90) is not stored in said memory database (9).

15. Method according to claim 14, wherein forwarding said inform message concerns:
- opening an ACS session with said prioritized ACS server (6) and via said ACS session forwarding said inform message to said prioritized ACS server (6), if said CPE device identification (90) is stored in said memory database (9); or
- opening an ACS session with said non-prioritized ACS server (5) and via said ACS session forwarding said inform message to said non-prioritized ACS server (5), if said CPE device identification (90) is not stored in said memory database (9).

## Patentansprüche

1. Lastausgleichsserver (1) zum Weiterleiten von Verkehr von und zu mehreren Autokonfigurationsservern, ACS-Servern (5, 6), wobei der Lastausgleichsserver (1) über ein Netzwerk (8) an mindestens eine Kundenendgerät-Vorrichtung, CPE-Vorrichtung (7), gekoppelt ist, an einen oder mehrere priorisierte ACS-Server (5) gekoppelt ist und an einen oder mehrere nicht-priorisierte ACS-Server (6) gekoppelt ist, wobei der besagte Lastausgleichsserver (1) Folgendes umfasst:
- ein Speichermodul (2), das ausgelegt ist zum
∘ Empfangen einer CPE-Priorisierungsanfrage, die eine CPE-Vorrichtungsidentifikation (90) und eine entsprechende Time-to-Live (91) umfasst;
∘ Speichern der besagten CPE-Vorrichtungsidentifikation (90) und der besagten entsprechenden Time-to-Live (91) in einer Speicherdatenbank (9);
∘ Entfernen der besagten CPE-Vorrichtungsidentifikation (90) aus der besagten Speicherdatenbank (9) und der besagten entsprechenden Time-to-Live (91), wenn die besagte Time-to-Live (91) abgelaufen ist,
- ein Empfangsmodul (3), das ausgelegt ist zum
∘ Empfangen einer Informationsnachricht;
∘ Extrahieren einer CPE-Vorrichtungsidentifikation (90) aus der besagten Informationsnachricht;
∘ Bestimmen, ob die besagte CPE-Vorrichtungsidentifikation (90) in der besagten Speicherdatenbank (9) gespeichert ist, und
- ein Weiterleitungsmodul (4), das ausgelegt ist zum Weiterleiten der besagten Informationsnachricht an:
∘ einen priorisierten ACS-Server (6), wenn die besagte CPE-Vorrichtungsidentifikation (90) in der besagten Speicherdatenbank (9) gespeichert ist;
∘ einen nicht-priorisierten ACS-Server (5), wenn die besagte CPE-Vorrichtungsidentifikation (90) nicht in der besagten Speicherdatenbank (9) gespeichert ist.

2. Lastausgleichsserver (1) nach Anspruch 1, wobei das besagte Weiterleitungsmodul (4) ausgelegt ist zum Öffnen einer ACS-Sitzung mit dem besagten priorisierten ACS-Server (6) und, über die besagte ACS-Sitzung, Weiterleiten der besagten Informationsnachricht an den besagten priorisierten ACS-Server (6), wenn die besagte CPE-Vorrichtungsidentifikation (90) in der besagten Speicherdatenbank (9) gespeichert ist, und wobei das besagte Weiterleitungsmodul (4) ausgelegt ist zum Öffnen einer ACS-Sitzung mit dem besagten nicht-priorisierten ACS-Server (5) und, über die besagte ACS-Sitzung, Weiterleiten der besagten Informationsnachricht an den besagten nicht-priorisierten ACS-Server (5), wenn die besagte CPE-Vorrichtungsidentifikation (90) nicht in der besagten Speicherdatenbank (9) gespeichert ist.

3. Lastausgleichsserver (1) nach Anspruch 1, wobei das besagte Empfangsmodul (3) weiterhin ausgelegt ist zum:
- Empfangen von einer oder mehreren nachfolgenden Nachrichten von einer CPE-Vorrichtung (7) entsprechend der besagten CPE-Vorrichtungsidentifikation (90); und
wobei das besagte Weiterleitungsmodul (4) weiterhin ausgelegt ist zum:
- Weiterleiten der besagten einen oder mehreren nachfolgenden Nachrichten an:
∘ den besagten priorisierten ACS-Server (6), wenn die besagte CPE-Vorrichtungsidentifikation (90) in der besagten Speicherdatenbank (9) gespeichert ist;
∘ den besagten nicht-priorisierten ACS-Server (5), wenn die besagte CPE-Vorrichtungsidentifikation (90) nicht in der besagten Speicherdatenbank (9) gespeichert ist.

4. Lastausgleichsserver (1) nach Anspruch 1, wobei die besagte CPE-Vorrichtungsidentifikation (90) einer CPE-Vorrichtung (7) entspricht, die dazu bestimmt ist, verzögerungsempfindliche ACS-Vorgänge durchzuführen.

5. Lastausgleichsserver (1) nach Anspruch 1, wobei die besagte CPE-Vorrichtungsidentifikation (90) einer CPE-Vorrichtung (7) entspricht, die dazu bestimmt ist, von einer Northbound-Interface, NBI, initiierte ACS-Vorgänge durchzuführen.

6. Lastausgleichsserver (1) nach Anspruch 1, wobei die besagte CPE-Priorisierungsanfrage von einem ACS-Server (6) oder einem Betriebsunterstützungssystem, OSS, (61) eines ACS-Servers (6) empfangen wird.

7. Lastausgleichsserver (1) nach Anspruch 1, wobei das besagte Speichermodul (2) ausgelegt ist zum Speichern der besagten CPE-Vorrichtungsidentifikation (90) und der besagten entsprechenden Time-to-Live (91) in einer Speicherdatenbank (9) durch Hinzufügen eines Datenprotokolls (93) zu einer Datenprotokollliste (94) in der besagten Speicherdatenbank (9), wobei das besagte Datenprotokoll (93) die besagte CPE-Vorrichtungsidentifikation (90) und die besagte entsprechende Time-to-Live (91) umfasst.

8. Lastausgleichsserver (1) nach Anspruch 1, wobei die besagte Time-to-Live (91) der besagten CPE-Priorisierungsanfrage eine vorausbestimmte Time-to-Live betrifft.

9. Lastausgleichsserver (1) nach Anspruch 1, wobei die besagte Time-to-Live (91) der besagten CPE-Priorisierungsanfrage eine ACS-vorgangsspezifische Time-to-Live betrifft.

10. Lastausgleichsserver (1) nach Anspruch 1, wobei die besagte CPE-Vorrichtungsidentifikation (90) eines oder mehrere aus der folgenden Liste umfasst:
- eine Vorrichtungsseriennummer;
- eine Herstellerkennung, OUI;
- eine Produktklasse.

11. Lastausgleichsserver (1) nach Anspruch 1, wobei Informationsnachrichten und/oder nachfolgende Nachrichten von dem besagten Lastausgleichsserver (1) gemäß einem HTTP-basierten Protokoll weitergeleitet werden.

12. Lastausgleichsserver (1) nach Anspruch 1, wobei das besagte HTTP-basierte Protokoll ein TR-069-Protokoll betrifft.

13. Lastausgleichsserver (1) nach Anspruch 1, wobei die besagte CPE-Priorisierungsanfrage über einen Anruf einer Schnittstelle zur Anwendungsprogrammierung, API, empfangen wird.

14. Verfahren zum Weiterleiten von Verkehr von und zu mehreren Autokonfigurationsservern, ACS-Servern (5, 6), wobei das besagte Verfahren folgende Schritte umfasst:
- Empfangen einer Priorisierungsanfrage eines Kundenendgeräts, CPE, die eine CPE-Vorrichtungsidentifikation (90) und eine entsprechende Time-to-Live (91) umfasst;
- Speichern der besagten CPE-Vorrichtungsidentifikation (90) und der besagten entsprechenden Time-to-Live (91) in einer Speicherdatenbank (9);
- Entfernen der besagten CPE-Vorrichtungsidentifikation (90) aus der besagten Speicherdatenbank (9) und der besagten entsprechenden Time-to-Live (91), wenn die besagte Time-to-Live (91) abgelaufen ist,
- Empfangen einer Informationsnachricht;
- Extrahieren einer CPE-Vorrichtungsidentifikation (90) aus der besagten Informationsnachricht;
- Bestimmen, ob die besagte CPE-Vorrichtungsidentifikation (90) in der besagten Speicherdatenbank (9) gespeichert ist, und
- Weiterleiten der besagten Informationsnachricht an:
∘ einen priorisierten ACS-Server (6), wenn die besagte CPE-Vorrichtungsidentifikation (90) in der besagten Speicherdatenbank (9) gespeichert ist;
∘ einen nicht-priorisierten ACS-Server (5), wenn die besagte CPE-Vorrichtungsidentifikation (90) nicht in der besagten Speicherdatenbank (9) gespeichert ist.

15. Verfahren nach Anspruch 14, wobei das Weiterleiten der besagten Informationsnachricht Folgendes betrifft:
- Öffnen einer ACS-Sitzung mit dem besagten priorisierten ACS-Server (6) und, über die besagte ACS-Sitzung, Weiterleiten der besagten Informationsnachricht an den besagten priorisierten ACS-Server (6), wenn die besagte CPE-Vorrichtungsidentifikation (90) in der besagten Speicherdatenbank (9) gespeichert ist; oder
- Öffnen einer ACS-Sitzung mit dem besagten nicht-priorisierten ACS-Server (5) und, über die besagte ACS-Sitzung, Weiterleiten der besagten Informationsnachricht an den besagten nicht-priorisierten ACS-Server (5), wenn die besagte CPE-Vorrichtungsidentifikation (90) nicht in der besagten Speicherdatenbank (9) gespeichert ist.

## Revendications

1. Serveur d'équilibrage de charge (1) pour transférer un trafic à partir de multiples serveurs d'auto-configuration, ACS (5, 6) et vers ceux-ci, ledit serveur d'équilibrage de charge (1) étant couplé par l'intermédiaire d'un réseau (8) à au moins un dispositif d'équipement des locaux d'abonné, CPE, (7), couplé à un ou plusieurs serveurs ACS hiérarchisés (5) et couplé à un ou plusieurs serveurs ACS non hiérarchisés (6), ledit serveur d'équilibrage de charge (1) comprenant :
- un module de stockage (2) configuré pour :
∘ recevoir une demande de hiérarchisation de CPE comprenant une identification de dispositif CPE (90) et une durée de vie correspondante (91) ;
∘ stocker ladite identification de dispositif CPE (90) et ladite durée de vie correspondante (91) dans une base de données de mémoire (9) ;
∘ éliminer ladite identification de dispositif CPE (90) de ladite base de données de mémoire (9) et ladite durée de vie correspondante (91) lorsque ladite durée de vie (91) est expirée,
- un module de réception (3) configuré pour :
∘ recevoir un message d'information ;
∘ extraire une identification de dispositif CPE (90) dudit message d'information ;
∘ déterminer si ladite identification de dispositif CPE (90) est stockée dans ladite base de données de mémoire (9), et
- un module de transfert (4) configuré pour transférer ledit message d'information vers :
∘ un serveur ACS hiérarchisé (6), si ladite identification de dispositif CPE (90) est stockée dans ladite base de données de mémoire (9) ;
∘ un serveur ACS non hiérarchisé (5), si ladite identification de dispositif CPE (90) n'est pas stockée dans ladite base de données de mémoire (9).

2. Serveur d'équilibrage de charge (1) selon la revendication 1, dans lequel ledit module de transfert (4) est configuré pour ouvrir une session ACS avec ledit serveur ACS hiérarchisé (6) et, par l'intermédiaire de ladite session ACS, pour transférer ledit message d'information vers ledit serveur ACS hiérarchisé (6), si ladite identification de dispositif CPE (90) est stockée dans ladite base de données de mémoire (9), et dans lequel ledit module de transfert (4) est configuré pour ouvrir une session ACS avec ledit serveur ACS non hiérarchisé (5) et, par l'intermédiaire de ladite session ACS, pour transférer ledit message d'information vers ledit serveur ACS non hiérarchisé (5), si ladite identification de dispositif CPE (90) n'est pas stockée dans ladite base de données de mémoire (9).

3. Serveur d'équilibrage de charge (1) selon la revendication 1, dans lequel ledit module de réception (3) est en outre configuré pour :
- recevoir un ou plusieurs messages ultérieurs à partir d'un dispositif CPE (7) correspondant à ladite identification de dispositif CPE (90) ; et
dans lequel ledit module de transfert (4) est en outre configuré pour :
- transférer ledit ou lesdits messages ultérieurs :
∘ vers ledit serveur ACS hiérarchisé (6), si ladite identification de dispositif CPE (90) est stockée dans ladite base de données de mémoire (9) ;
∘ vers ledit serveur ACS non hiérarchisé (5), si ladite identification de dispositif CPE (90) n'est pas stockée dans ladite base de données de mémoire (9).

4. Serveur d'équilibrage de charge (1) selon la revendication 1, dans lequel ladite identification de dispositif CPE (90) correspond à un dispositif CPE (7) qui est déterminé comme effectuant des opérations ACS sensibles au délai.

5. Serveur d'équilibrage de charge (1) selon la revendication 1, dans lequel ladite identification de dispositif CPE (90) correspond à un dispositif CPE (7) qui est déterminé comme effectuant des opérations ACS initiées par une interface vers les services, NBI.

6. Serveur d'équilibrage de charge (1) selon la revendication 1, dans lequel ladite demande de hiérarchisation de CPE provient d'un serveur ACS (6) ou d'un système d'aide à l'exploitation, SAE, (61) d'un serveur ACS (6).

7. Serveur d'équilibrage de charge (1) selon la revendication 1, dans lequel ledit module de stockage (2) est configuré pour stocker ladite identification de dispositif CPE (90) et ladite durée de vie correspondante (91) dans une base de données de mémoire (9) en ajoutant un enregistrement de données (93) à une liste d'enregistrements de données (94) dans ladite base de données de mémoire (9), dans lequel ledit enregistrement de données (93) comprend ladite identification de dispositif CPE (90) et ladite durée de vie correspondante (91).

8. Serveur d'équilibrage de charge (1) selon la revendication 1, dans lequel ladite durée de vie (91) de ladite demande de hiérarchisation de CPE concerne une durée de vie prédéterminée.

9. Serveur d'équilibrage de charge (1) selon la revendication 1, dans lequel ladite durée de vie (91) de ladite demande de hiérarchisation de CPE concerne une durée de vie spécifique aux opérations ACS.

10. Serveur d'équilibrage de charge (1) selon la revendication 1, dans lequel ladite identification de dispositif CPE (90) comprend un ou plusieurs éléments de la liste suivante :
- un numéro de série du dispositif ;
- un identifiant unique d'organisation, OUI ;
- une classe de produit.

11. Serveur d'équilibrage de charge (1) selon la revendication 1, dans lequel des messages d'information et/ou des messages ultérieurs sont transférés par ledit serveur d'équilibrage de charge (1) conformément à un protocole HTTP.

12. Serveur d'équilibrage de charge (1) selon la revendication 1, dans lequel ledit protocole HTTP concerne un protocole TR-069.

13. Serveur d'équilibrage de charge (1) selon la revendication 1, dans lequel ladite demande de hiérarchisation de CPE est reçue par l'intermédiaire d'un appel d'interface de programmation d'application, API.

14. Procédé pour transférer un trafic à partir de multiples serveurs d'auto-configuration, ACS (5, 6) et vers ceux-ci, ledit procédé comprenant les étapes suivantes :
- recevoir une demande de hiérarchisation d'équipement des locaux d'abonné, CPE, comprenant une identification de dispositif CPE (90) et une durée de vie correspondante (91) ;
- stocker ladite identification de dispositif CPE (90) et ladite durée de vie correspondante (91) dans une base de données de mémoire (9) ;
- éliminer ladite identification de dispositif CPE (90) de ladite base de données de mémoire (9) et ladite durée de vie correspondante (91) lorsque ladite durée de vie (91) est expirée ;
- recevoir un message d'information ;
- extraire une identification de dispositif CPE (90) dudit message d'information ;
- déterminer si ladite identification de dispositif CPE (90) est stockée dans ladite base de données de mémoire (9) ; et
- transférer ledit message d'information vers :
∘ un serveur ACS hiérarchisé (6), si ladite identification de dispositif CPE (90) est stockée dans ladite base de données de mémoire (9) ;
∘ un serveur ACS non hiérarchisé (5), si ladite identification de dispositif CPE (90) n'est pas stockée dans ladite base de données de mémoire (9).

15. Procédé selon la revendication 14, dans lequel le transfert dudit message d'information concerne :
- l'ouverture d'une session ACS avec ledit serveur ACS hiérarchisé (6) et, par l'intermédiaire de ladite session ACS, le transfert dudit message d'information vers ledit serveur ACS hiérarchisé (6), si ladite identification de dispositif CPE (90) est stockée dans ladite base de données de mémoire (9) ; ou
- l'ouverture d'une session ACS avec ledit serveur ACS non hiérarchisé (5) et, par l'intermédiaire de ladite session ACS, le transfert dudit message d'information vers ledit serveur ACS non hiérarchisé (5), si ladite identification de dispositif CPE (90) n'est pas stockée dans ladite base de données de mémoire (9).
